# EUROPEAN PATENT APPLICATION

(11) **EP 2 053 722 A2**
(43) Date of publication of application: **29.04.2009**
(21) Application number: 08018563.0
(22) Date of filing: 23.10.2008
(51) Int. Cl.: H02K 1/14

(54) **Electrical machine and vehicle drive equipped with the same**

(30) Priority: 23.10.2007 JP 2007274582
(71) Applicant: Hitachi Ltd., Chiyoda-ku Tokyo 100-8280 (JP)
(72) Inventor: Nishidate, Keisuke, Tokyo (JP); Ito, Masaru, Tokyo (JP); Obara, Shingo, Tokyo (JP); Fujiwara, Shin, Hitachinaka-shi Ibaraki (JP)
(74) Representative: Beetz & Partner

(57) **Abstract**

An electrical machine includes a stator that includes: a yoke formed with laminated annular steel sheets; and a plurality of magnetic poles which protrude towards an inner diameter side of the yoke and on which a field coil is wound. In the stator, a radial width of a part of the yoke corresponding to a magnetic pole width is broader to an outer diameter side than a radial width of a part of the yoke provided throughout between the magnetic poles; and the stator is provided with a thorough-hole for a tightening bolt in the part of the yoke with the broad radial width.

## Description

### INCORPORATION BY REFERENCE

The disclosure of the following priority application is herein incorporated by reference:
Japanese Patent Application No. 2007-274582 filed October 23, 2007
The present invention relates to an electrical machine and a vehicle drive device equipped with the same, representatively a technology for improving magnetic properties of the electrical machine.

A stator of the electrical machine is provided with a circular outer periphery, a yoke with a constant width that is concentric with the periphery, a plurality of magnetic poles protruding from an inner periphery of the yoke, and coils that are wound on the plurality of magnetic poles. The stator of the electrical machine is fixed to front and rear brackets of the electrical machine.

A stator and a bracket are usually fixed to each other by inserting bolts through spaces between adj acent coils wound on magnetic poles and by screwing the bolts to the bracket. By this fixing method, the bolts will not be exposed on the outer periphery side of the stator. Therefore, damage to the bolts by external impact and loss of joint strength are prevented.

However, the above method limits the number of turns of the coils since the bolts occupy the spaces between magnetic poles.

As Japanese Laid Open Patent PublicationNo. 2006-109691 (reference literature 1) discloses, inserting bolts into through-holes provided on a yoke and screwing the bolts to a bracket enable an efficient use of the spaces between magnetic poles. In the art disclosed in reference literature 1, the outer periphery of the stator with a plurality of laminated sheets is quadrilateral, and through-holes are provided on the four angles of the yoke. The through-holes are used for the bolts to pass through so as to fix the stator to the housing. Since, in the technology disclosed in reference literature 1, the bolts are not exposed from the yoke, damage to the bolts by external impact and deterioration of joint strength are preventable.

In the technology disclosed in reference literature 1, the number of magnetic poles disposed at the inner periphery of the yoke is six, disagreeing with the four angles of the outer periphery of the yoke. Positional relationship between the angles of the outer periphery of the yoke and the magnetic poles is not specified. Thus, there is a defect that, assuming that the number of the magnetic poles of the stator of the electrical machine is four, positional relationship between the magnetic poles and the four angles of the quadrilateral yoke can not be defined.

This defect is to be seen again in a back of yoke, which is at an angle of the quadrilateral yoke, opposing a coil wound on magnetic poles, i.e., a slot, a back yoke opposing the magnetic poles, or a back yoke opposing the middle part between the slot and the magnetic poles. In particular, if the number of the magnetic poles and the number of angles of the polygon disagree with each other, the angles are to exist in various positions. Thus, the following problem exists in the case where the back yoke opposing the position of the magnetic poles is not placed on the angle: The magnetic poles protrude in the direction towards an axis of the rotor and generate electromagnetic force between the magnetic poles and the rotor. Accordingly, in the yoke particularly, vibration around the magnetic pole is caused by magnetic vibration and magnetic noise increases.

According to a representative of the present invention, an electrical rotating machine and a vehicle drive device equipped with the electrical rotating machine capable of improving magnetic properties are provided.

Here, the magnetic properties include torque characteristics of the rotating machine and magnetic noise characteristics.

A representative of the present invention is
characterized in that a radial width of a yoke which is opposite to a rotor side of a magnetic pole is broadened. Furthermore, a representative of the present invention is **characterized in that** a through-hole for a bolt is disposed in a part of the yoke achieved by broadening a radial width of the yoke.

According to the representative of the present invention, since the radial width of a yoke which is opposite to a rotor side of a magnetic pole is broadened, a torque of the rotating machine can be increased. Moreover, according to the representative of the present invention, since the through-hole for a bolt is disposed in apart of the yoke achieved by broadening a radial width of the yoke, contact pressures between thin steel plates which constitute the yoke and the magnetic pole are increased so that magnetic vibrations and magnetic noise generated at the magnetic pole can be reduced.

An electrical machine according to a first aspect of the present invention comprises: a stator that comprises: a yoke formed with laminated annular steel sheets; and a plurality of magnetic poles which protrude towards an inner diameter side of the yoke and on which a field coil is wound, wherein: in the stator, a radial width of a part of the yoke corresponding to a magnetic pole width is broader to an outer diameter side than a radial width of a part of the yoke provided throughout between the magnetic poles; and the stator is provided with a thorough-hole for a tightening bolt in the part of the yoke with the broad radial width.

According to a second aspect of the present invention, in the electrical machine according to the first aspect, it is preferable that the stator is sandwiched by two brackets and fixed by a bolt passing through the through-hole.

According to a third aspect of the present invention, in the electrical machine according to the second aspect, it is preferable that one of the two brackets is a bracket of a part to which an output shaft of the electrical machine is connected and which is provided with a drive mechanism.

According to a fourth aspect of the present invention, in the electrical machine according to any of the first to third aspects, it is preferable that a shape of an outer periphery of the stator is a quadrilateral.

According to a fifth aspect of the present invention, in the electrical machine according to any of the first to third aspects, it is preferable that a shape of an outer periphery of the stator is a quadrilateral; a number of the magnetic poles which protrude inward is a same as a number of angles of the quadrilateral; and as many the through-holes as the angles of the quadrilateral are arranged in a back yoke width which corresponds to the magnetic pole width extended to the outer diameter side.

According to a sixth aspect of the present invention, in the electrical machine according to any of the first to third aspects, it is preferable that a shape of an outer periphery of the stator is a quadrilateral, and the magnetic poles and the through-holes are disposed in positions that include diagonal line segments of the quadrilateral.

According to a seventh aspect of the present invention, in the electrical machine according to any of the first to third aspects, it is preferable that a shape of an outer periphery of the stator is a quadrilateral, and the magnetic poles and the through-holes are disposed in symmetric positions on the diagonal line segments of the quadrilateral.

According to a eighth aspect of the present invention, in the electrical machine according to any of the first to third aspects, it is preferable that a shape of an outer periphery of the stator is a polygon.

According to a ninth aspect of the present invention, in the electrical machine according to any of the first to third aspects, it is preferable that a shape of an outer periphery of the stator is a polygon; a number of the magnetic poles which protrude inward is a same as a number of angles of the polygon; and as many the through-holes as the angles of the polygon are arranged in a back yoke width which corresponds to the magnetic pole width extended to the outer diameter side.

According to a tenth aspect of the present invention, in the electrical machine according to any of the first to third aspects, it is preferable that a shape of an outer periphery of the stator is a polygon, and the magnetic poles and the through-holes are disposed in positions that include line segments connecting a center and angles of the polygon.

An electrical machine according to an eleventh aspect of the present invention comprises: a rotor that is rotatably held; and a stator that is placed opposite to the rotor across a void, and comprises an annular core, a plurality of toothed cores that protrude from a surface of the rotor side of the annular core toward the rotor and that are circumferentially placed at intervals, and a coil that is wound on the plurality of toothed cores, wherein: the annular core and the plurality of toothed cores are configured so as to establish a relation, Lc < La < Lb, where: La is a circumferential width at an end of an annular core side of the toothed core; Lb is a minimum radial width of an extension part of the annular core that corresponds to an area of the circumferential width La and that extends on an opposite side of the rotor side of the toothed core; and Lc is a minimum radial width of a bridge part of the annular core that connects between circumferentially adjacent extension parts of the annular core.

According to a twelfth aspect of the present invention, in the electrical machine according to the eleventh aspect, it is preferable that the extension part of the annular core is provided with a through-hole through which a fixing bolt for fixing the stator is inserted.

An electrical machine according to a thirteenth aspect of the present invention comprises: a rotor that is rotatably held; and a stator that is placed opposite to the rotor across a void, and comprises an annular core, a plurality of toothed cores that protrude from a surface of the rotor side of the annular core toward the rotor and that are circumferentially placed at intervals, and a coil that is wound on the plurality of toothed cores, wherein: the toothed core is formed so that its circumferential width is greater than the minimum radial width of the annular core; and in the stator, a magnetic circuit is configured so that a magnetic flux, flowing from the rotor side of the toothed core to another side, flows through a part of the annular core whose radial width is greater than the minimum radial width of the annular core and the circumferential width of the toothed core, to a side of the minimum radial width of the annular core.

According to a fourteenth aspect of the present invention, in the electrical machine according to the thirteenth aspect, it is preferable that the annular core part with the greater radial width is provided with a through-hole through which a fixing bolt for fixing the stator is inserted.

A vehicle drive device according to a fifteenth aspect of the present invention comprises: an electrical machine that drives wheels other than wheels driven by an internal-combustion engine; an electrical generator that is driven by the internal-combustion engine and that generates electric power for driving the electrical machine to supply the power to the electrical machine; and a control device that controls drive of the electrical machine and the electrical generator, wherein: the electrical machine is configured with the electrical machine according to the first or eleventh or thirteenth aspect.

### BRIEF DESCRIPTION OF THE DRAWINGS

FIG. 1 is a sectional view showing the structure of a stator and a rotor of an electrical machine according to a first embodiment of the present invention.
FIGS. 2A ∼ C are views showing torque characteristics of the electrical machine in FIG.1, with FIGS. 2A and 2B showing sectional views of analysis models, and FIG. 2C showing a graph of torque characteristics by the analysis models of FIGS. 2A and 2B.
FIG. 3 is a plan view with a partial cross section showing mounting of the electrical machine of FIG. 1 to a differential gear box.
FIG.4 is a schematic sectional view showing a drive system of a four-wheel drive vehicle on which the electrical machine of FIG. 1 is installed.

FIG. 5 is a sectional view showing a stator of an electrical machine according to a second embodiment of the present invention.

### DESCRIPTION OF PREFERRED EMBODIMENTS

Embodiments of the present invention are now described with reference to drawings.

In the following description of embodiments, the electrical machine to which the present invention is applied is mounted on a vehicle as a vehicle drive electrical machine. However, the electrical machine to which the present invention is applied may be used as an in-vehicle auxiliaries drive electrical machine.

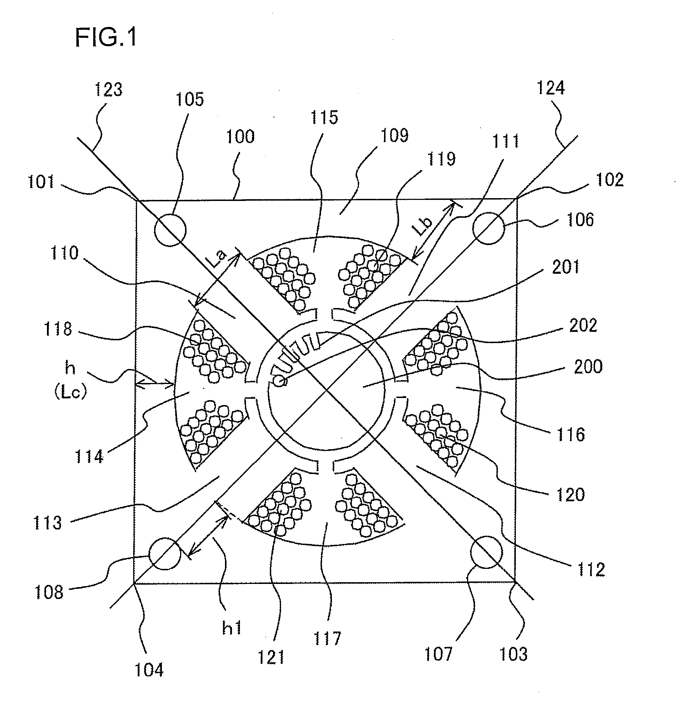

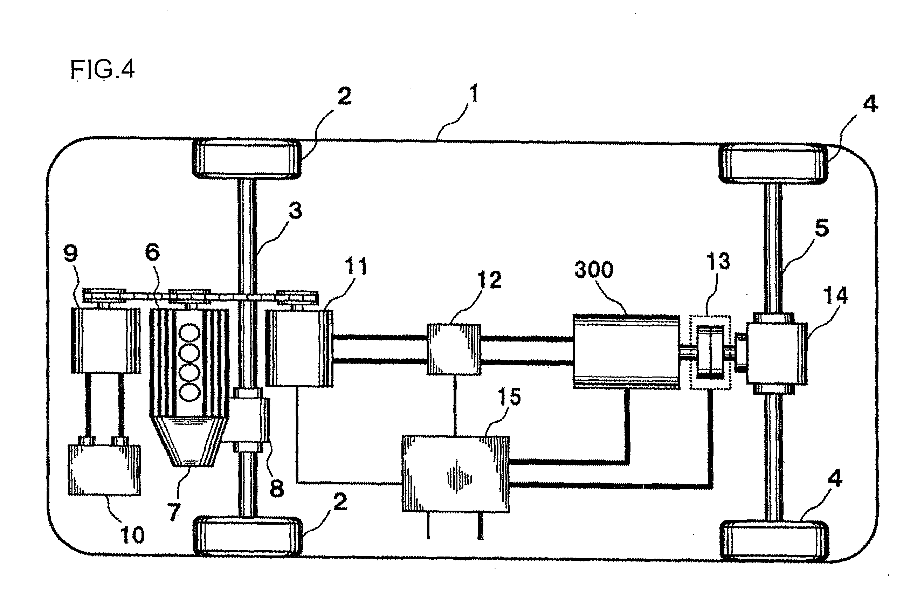

The electrical machine to which the present invention is applied may also be adopted to electrical machines other than vehicles, including an industrial electrical machine installed in a power plant of a factory or the like, a home appliance electrical machine mounted on a home appliance such as an air conditioner or the like, and so on. It is preferred particularly for an electrical machine that requires improvement of output.
- First embodiment - The first embodiment of the present invention is now described based upon FIGS. 1 ∼ 4.
   The present embodiment is an exemplary embodiment of the electrical machine according to the present invention adopted to a four-wheel drive hybrid electric vehicle with which a motor drive battery is not equipped.
   Initially, a drive system configuration of the four-wheel drive hybrid electric vehicle with which a motor drive battery is not equipped is explained with reference to FIG. 4.
   It should be noted that in FIG. 4 a control cable, through which control signals are transmitted, is indicated by a thin solid line, while an electric cable, through which electrical energy is supplied, is indicated by a solid line thicker than the solid line indicating the control cable.
   A four-wheel drive hybrid electric vehicle with which a motor drive battery is not equipped (hereinafter referred to as a "four-wheel drive vehicle 1") is a hybrid drive vehicle that includes a drive system with an engine 6 and a drive system with an electrical machine 300. Front wheels 2 (driving wheels / main wheels) are driven by the engine 6, which is an internal combustion engine. Rear wheels 4 (driven wheels / follower wheels) are driven by the electrical machine 300, which is a rotating electrical machine. The engine 6, which is a power source that constitutes a main drive-train of the front wheels 2, generates rotating power using thermal energy in a whole traveling range of the vehicle. The electrical machine 300, which is a power source that constitutes a following drive-train of the rear wheels 4, generates rotating drive power using electric energy from startup of the vehicle until the traveling speed reaches a traveling speed range in which only the engine 6 is used. The electrical machine 300 generates rotating drive power using electric energy also when the front wheels 2, which are driven by the engine 6, have slippage on the road with low coefficient of friction µ, such as an icy road so that the power by the engine 6 is not transmitted to the road.
   The present embodiment is described with reference to an example in which the engine 6 drives the front wheels 2 and the electrical machine 300 drives the rear wheels 4. However, it may be configured that the engine 6 drives the rear wheels 4 and the electrical machine 300 drives the front wheels 2.
   The rotating power from the engine 6 is transmitted to a drive shaft 3 of the front wheels 2 via a power transmission mechanism 8 after its speed is changed by an automatic speed changer 7. This causes the front wheels 2 to be driven by the engine 6 in a whole traveling range of the vehicle.
   The engine 6 is mechanically connected via a belt with an electrical generator 9 for in-vehicle auxiliaries and an electrical generator 11 for driving. Both of the generators operate on rotating power from the engine 6 and generate electric power for different applications.
   The electrical generator 9 for in-vehicle auxiliaries, constituting an in-vehicle 14-volt power source, generates DC power to charge an in-vehicle battery 10 with nominal output voltage of 12V and DC power to drive the in-vehicle auxiliaries.
   The electrical generator 11 for driving constitutes a motor power source that generates electric power specially for driving the electrical machine 300 and constitutes an in-vehicle 42-volt power source that outputs electric power higher than the electrical generator 9 for in-vehicle auxiliaries does. The electrical generator 11 for driving varies the output voltage from 0 volt to 50 volt or to 60 volt, depending on drive power required for the electrical machine 300.
   In the present embodiment, the electrical generator 11 for driving is used as a power source for the electrical machine 300. In this case, a high-capacity battery specially for motor driving is unnecessary. This reduces the space for the driven wheel system for the driven wheels (the rear wheels 4 in the present embodiment), and provides the driven wheel system which is less expensive than a mechanical four-wheel drive vehicle, which drives front and rear wheels using power from the engine.
   In the present embodiment, since the electrical generator 11 for driving is used as a power source for driving the electrical machine 300 at a low voltage and a high current, a high output torque required according to a performance of a vehicle can be achieved. Thus, the driven wheel system that is comparable to a mechanical four-wheel drive vehicle, which drives front and rear wheels using power from the engine, can be provided.
   It should be noted that a battery for motor driving (a battery with nominal output voltage of 36V, which is higher than the in-vehicle battery 10) may be mounted so that electric power from the electrical generator 11 for driving is charged in the battery for motor driving. It may be configured that at braking, the electrical machine 300 is used as an electrical generator and the generated electric power is charged in the battery for motor driving.
   The electrical generator 9 for in-vehicle auxiliaries and the electrical generator 11 for driving, together with the engine 6, are disposed in an engine room. The electrical generator 11 for driving, which is a water-cooled closed rotating electrical machine, can be mounted on the engine 6 at a position lower than that of the electrical generator 9 for in-vehicle auxiliaries, which is an air-cooled open rotating electrical machine.
   In the present embodiment, as described above, since any battery for motor driving is not provided, the DC power from the electrical generator 11 for driving is input directly to an armature of the electrical machine 300 via a relay 12. The electrical machine 300 operates on the DC power and generates rotating power necessary to drive the rear wheels 4.
   The rotating power from the electrical machine 300 is transmitted to a drive shaft 5 of the rear wheels 4 via a clutch 13 connected to an output side of the electrical machine 300 and the differential gear 14 connected to an output side of the clutch 13. This drives the rear wheels 4 from startup of the vehicle until the traveling speed reaches a traveling speed range in which only the engine 6 is used. The rear wheels 4 are driven when the front wheels 2, which are driven by the engine 6, have slippage on the road with low coefficient of friction µ, such as an icy road, so that the power from the engine 6 is not transmitted to the road. Thus, the driven wheel system according to the present embodiment enables the vehicle to start and travel with high torque while stabilizing the vehicle, and allows the front wheels 2 to immediately hold the road even after the front wheels 2 had slippage. As a result, the vehicle can travel stably and firmly on the road with low coefficient of friction p. The differential gear 14 is a power transmission mechanism to distribute the rotating power from the electrical machine 300 to both sides of the drive shaft 5. The differential gear 14 is integrally provided with a reducer for reducing the rotating power from the electrical machine 300.

The electrical machine 300 is placed under the floor of rear seat and luggage room, in a small space adjacent to the differential gear 14.

The electrical machine 300 is configured in a unit construction integral with the clutch 13 and the differential gear 14.

The clutch 13 is an electromagnetic power interruption mechanism with two electromagnetically-controlled clutch plates for controlling power transmission. From startup of the vehicle until the traveling speed reaches a traveling speed range in which only the engine 6 is used, the two clutch plates are engaged so that the rotating power from the electrical machine 300 is transmitted to the differential gear 14. Also when the front wheels 2, which are driven by the engine 6, have slippage on the road with low coefficient of friction µ, such as an icy road, in other words, when the power by the engine 6 is not transmitted to the road, the two clutch plates are engaged so that the rotating power from the electrical machine 300 is transmitted to the differential gear 14. During traveling using only the engine 6, the two clutch plates are disengaged so that the transmission of the rotating power from the electrical machine 300 to the differential gear 14 is interrupted.

Operations of devices that constitute the driven wheel system of the rear wheels 4 are controlled by a signal or electric power supplied from a four-wheel drive control device 15. The four-wheel drive control device 15 is provided with a micro computer that executes operations for controlling the devices based upon a program, a storage device that stores the program to be executed by the micro computer and data such as maps, parameters, and the like, a plurality of control boards on which a plurality of electronic components such as integrated circuits (IC) on which circuit elements such as resistors are integrated, a chopper circuit for electrical machine field current that controls a field current supplied to a field coil of the electrical machine 300, and a chopper circuit for clutch exciting current that controls an exciting current supplied to an exciting coil of the clutch 13.

Controls performed by the four-wheel drive control device 15 include an electrical machine control, a relay control, an electrical machine field control, and a clutch control. The electrical machine control is performed as follows: By controlling a field current supplied to the electrical generator 11 for driving, electric power generation of the electrical generator 11 for driving is controlled. DC power supplied from the electrical generator 11 for driving to the electrical machine 300 is controlled so as to control drive of the electrical machine 300. The relay control is performed as follows: Drive of contacts of the relay 12 is controlled so that electrical connections between the electrical generator 11 for driving and the electrical machine 300 is controlled. The electrical machine field control is performed as follows: By controlling a field current supplied to the electrical machine 300, drive of the electrical machine 300 is controlled. The clutch control is performed as follows:
By controlling an exciting current supplied to the clutch 13, engagement and disengagement of the clutch 13 are controlled.

The devices that constitute the driven wheel system of the rear wheels 4 are electrically connected to the four-wheel drive control device 15 with signal cables or electric cables. The in-vehicle battery 10 is electrically connected to the four-wheel drive control device 15 with an electric cable. In-vehicle control devices (not figured herein) are electrically connected to the four-wheel drive control device 15 with local area network (LAN) cables. Information in each of the in-vehicle control devices are thus shared among the in-vehicle control devices. The in-vehicle control devices include component devices (a throttle valve, anintake/exhaust valve, and a fuel injection valve) of the engine 6, an engine control device that controls the electrical generator 9 for in-vehicle auxiliaries, a speed changer control device that controls the speed changer mechanism that constitutes the automatic speed changer 7, and an anti-lock braking system control device that controls a caliper cylinder mechanism that constitutes an anti-lock braking system.

The four-wheel drive control device 15 obtains, as necessary, an engine rotational speed signal, an accelerator opening degree signal, and a brake stroke signal from the engine control device, a shift position signal from the speed changer control device, and a wheel speed signal from the anti-lock braking system control device as input information, so as to use them for the individual controls mentioned above.

In the present embodiment, the electrical machine 300 is configured as described below so as to increase a torque outputted from the electrical machine 300. The vehicle is thus improved in drive performances including startup, acceleration, hill-climbing, escape from the wheel ruts or the like, slip control, and so on.

Configuration of the electrical machine 300 in the present embodiment is now explained with reference to FIG. 1.

FIG. 1 shows a cross-sectional view of a stator 100 and a rotor 200 of the electrical machine 300.

In the present embodiment, a DC shunt electrical machine that can easily performs switching between forward and reverse is used as the electrical machine 300. However, another DC electrical machine may be used as the electrical machine 300.

The electrical machine 300 is provided with the stator 100 on the field side and the rotor 200 on the armature side. The stator 100 and the rotor 200 are concentrically placed opposite to each other across a void. The rotor 200 is placed at the inner periphery side of the stator 100.

The stator 100 is provided with a square-pillar-shaped stator (field) core and field coils 118 ∼ 121 wound on the core.

The stator core is provided with a cylindrical (hollow) yoke 109 (annular core) with a cross-sectional shape of a quadrilateral (square) exterior and a circular interior, and four magnetic poles 110 ∼ 113 (toothed cores) that protrude from the inner surface of the yoke 109 (surface of the rotor side) to the inner diameter side (towards the rotor 200) and that are equally circumferentially placed. The yoke 109 and the four magnetic poles 110 ∼ 113 are integrally formed.

By arranging circumferentially the four magnetic poles 110 ∼ 113 with intervals, slots 114 ∼ 117, in which the field coils 118 ∼ 121 concentratedly wound on the core are placed, are provided between the circumferentially adjacent magnetic poles. Specifically, the slot 114 is formed between the circumferentially adjacent magnetic poles 110 and 113, with the slot 115 between the magnetic poles 110 and 111, the slot 116 between the magnetic poles 111 and 112, and the slot 117 between the magnetic poles 112 and 113. The field coil 118 is concentratedly wound on the magnetic pole 110 and is placed in the slots 114 and 115; The field coil 119 is concentratedly wound on the magnetic pole 111 and is placed in the slots 115 and 116; The field coil 120 is concentratedly wound on the magnetic pole 112 and is placed in the slots 116 and 117; And the field coil 121 is concentratedly wound on the magnetic pole 113 and is placed in the slots 117 and 114.

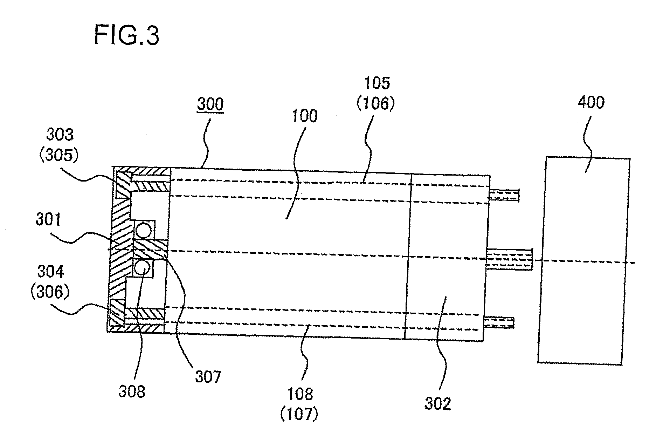

The yoke 109 is provided with four through-holes 105 - 108 for inserting the fixing bolts through. The through-holes 105 - 108 pass through the yoke 109 from an end face in the axial direction toward the other end face. By inserting the bolts through the through-holes 105 ∼ 108 and screwing the bolts to the bracket of the electrical machine 300, the stator 100 is fixed to the bracket of the electrical machine 300. This will be described below in detail with reference to FIG. 3.

As described above, the yoke 109 is provided with the quadrilateral (square) exterior with four angles 101 ∼ 104. In the present embodiment, the four magnetic poles 110 ∼ 113 and the four through-holes 105 ∼ 108 are provided in positions corresponding to the four angles 101 ∼ 104.

Diagonal lines, which connect angles facing to each other, are drawn on the sectional view of the stator core as in FIG. 1, namely a diagonal line 123 that connects the angle 101 and the angle 103 and a diagonal line 124 that connects the angle 102 and the angle 104. On the diagonal line 123, the magnetic pole 110 and the through-hole 105 which correspond to the angle 101 and the magnetic pole 112 and the through-hole 107 which correspond to the angle 103 are provided. On the diagonal line 124, the magnetic pole 111 and the through-hole 106 which correspond to the angle 102 and the magnetic pole 113 and the through-hole 108 which correspond to the angle 104 are provided. Center of each of the magnetic poles 110 and 112 and center of each of the through-holes 105 and 107 coincide with the diagonal line 123. Center of each of the magnetic poles 111 and 113 and center of each of the through-holes 106 and 108 coincide with the diagonal line 124.

The magnetic poles 110 and 112 extend toward the rotor 200 along the diagonal line 123 and face to each other across the rotor 200 and a void. The magnetic poles 111 and 113 extend toward the rotor 200 along the diagonal line 124 and face to each other across the rotor 200 and a void. Each end of rotor side of the magnetic poles 110 ∼ 113 extends along the rotor 200 circumferentially, and broadens toward the end.

The stator core is provided by axially laminating thin steel sheets (e.g. silicon steel sheets) whose part corresponding to the yoke 109 and parts corresponding to the magnetic pole 110 ∼ 113 are integrally formed.

The rotor 200 is provided with a rotor (armature) core and an armature coil 202 wound on the core.

A plurality of axially extended rotor slots 201 are placed equally circumferentially on the periphery of the cylindrical rotor core. The armature coil 202 is stored in the plurality of rotor slots 201. The armature coil 202 is provided by axially inserting a plurality of segment conductors obtained from a rectangular wire with a rectangular cross section into the plurality of rotor slots 201 and by connecting the end of the plurality of segment conductors with a commutator (not figured herein) which rotates together with the rotor core on the opposite side of the insert side of the plurality of segment conductors.

A brush (not figured) held in a brush holder (not figured) is pressed on the peripheral surface of the commutator. This causes the brush to contact with the commutator and establishes an electrical connection between the stator and the rotor. The brush is supplied with an armature current from the electrical generator 11 for driving. Therefore, the armature coil 202 is supplied with the armature current via the brush and the commutator. Through which segment conductor the armature current supplied to the armature coil 202 flows is determined according to the switching of a slide contact position between the commutator and the brush caused by rotation of the commutator.

When the field coils 118 ∼ 121 are supplied with a field current (DC current) from the in-vehicle battery so that a field magnetic flux is produced in the stator 100, and the drive armature coil 202 is supplied with an armature current (DC current) via the brush and the commutator so that a magnetic flux is produced in the rotor 200, electromagnetic force acts between the rotor 200 and the magnetic poles 110 ∼ 113. This causes the rotor 200 to rotate, thereby generating torque. The torque is output via an output shaft, which is an end of the shaft of the rotor 200.

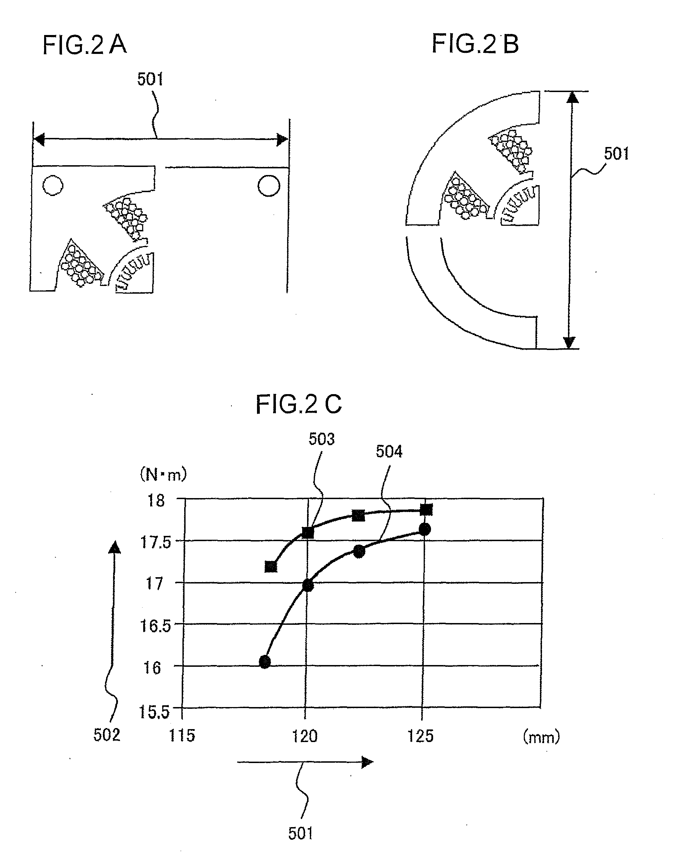

Torque characteristics of the electrical machine 300 are now explained with reference to FIGS. 2A to 2C.

FIG. 2C shows an analysis result of the torque characteristics of the electrical machine 300 in different external forms.

There are two analysis models with identical configurations of each of the magnetic poles 110 ∼ 113, the slots 114 ∼ 117, the field coils 118 ∼ 121, and the rotor 200, and identical rotational speeds, and a different external form of the yoke 109. FIG. 2A shows a model with the yoke 109 in a quadrilateral external form, in other words, with the stator 100 in a square pillar with a circular hollow. This model corresponds to the present embodiment. FIG. 2B shows another model with a yoke 109 in a circular external form, in other words, with a stator 100 in a cylindrical shape. FIG. 2C shows an analysis result of torque 502 generated corresponding to external form 501 of FIGS. 2A and 2B.

As shown in FIG. 2C, the torque characteristic 503 of the model in FIG. 2A gives greater torque than the torque characteristic 504 of the model in FIG. 2B does. This is because of the following reason.

The magnetic flux of the magnetic poles 110 ∼ 113 produced by the field coils 118 ∼ 121 is separated into right and left in the yoke 109, which is provided in the periphery of the magneticpoles, thereby flowing in R-shape. Increasing radius of the magnetic flux by radially-broadening the yoke 109, which is provided in the periphery of the magnetic poles 110 ∼ 113, realizes reducedmagnetoresistance and increased flux content. As a result, the torque is increased. This is supported by that, in the model in FIG. 2B, the yoke 109, which is provided in the periphery of the magnetic poles, increased in volume by increasing the external form 501 brings increased torque.

In the present embodiment, the magnetic pole 110 ∼ 113 are provided corresponding to the four angles 101 ∼ 104. The yoke 109, which is provided in the periphery of the magnetic poles, is radially-extended. Accordingly, radius of the magnetic flux that flows through the yoke 109 is increased.

Here, a magnitude relation, Lc<La<Lb, is established,
where: La is the circumferential width at the end of the yoke side of the magnetic pole; Lb is the minimum radial width of a part of the yoke that corresponds to an area of the circumferential width La of the magnetic pole (yoke extension on the extended line of the magnetic pole), which is provided in the periphery of the magnetic pole; and Lc is the minimum radial width of a part of the yoke (yoke bridge) that connects between circumferentially adjacent yoke extensions. Therefore, the magnetic flux flows magnetic paths from a magnetic path with width La of a magnetic pole to a magnetic path with width La of another magnetic pole via a magnetic path with the maximum width, a magnetic path with the minimum width, and the magnetic path with the maximum width in order. Hereat, the magnetic flux flowing through a magnetic pole toward the outer periphery in a radial direction changes in circumferential direction with large radius in the yoke extension. The magnetic flux flowing through the yoke bridge in the circumferential direction changes in a radial direction towards the inner periphery with large radius in the yoke extension.

It should be noted that the radial width of the yoke extension reaches its maximum on the extended line of the central axis of the magnetic pole.

For these reasons, in the present embodiment, the magnetoresistance is reduced and the flux content is increased, thereby increasing the torque of the electrical machine 300. High power and miniaturization are thus achieved according to the present embodiment.

Furthermore, in the present embodiment, since it is configured that only the part of the yoke that is provided in the periphery of the magnetic pole (on the extended line of the magnetic pole) and that corresponds to the area of the maximumcircumferential width of themagneticpole is increased in size, use of steel sheets can be minimum.

As described above, the stator core consists of the laminated steel sheet made of axially laminated thin steel sheets. This construction is employed by the following reason. When the direction of the armature current flowing through the armature coil 202 of the rotor 200 is switched by rotation of the rotor 200, and the magnetic flux is changed by the current change, an eddy current is generated in the stator core. The eddy current increases as the square of sheet thickness of the magnetic material. Therefore, the stator core is formed not of a single magnetic material but of the laminated steel sheet made of laminated thin steel sheets, thereby reducing the eddy current.

The eddy current generated in the stator core can not be reduced to zero even using the laminated steel sheet made of laminated thin steel sheets. When the magnetic flux is changed by the change of the armature current, the eddy current acts between the thin steel sheets. This causes vibration or noise (magnetic noise) between the thin steel sheets.

The higher the flux content and the electromagnetic power between the rotor 200 and the thin steel sheets of the magnetic pole 110 ∼ 113 are, the greater the magnetic noise is. When the change in the magnetic flux is great, e.g. when torque or rotational speed of the electrical machine 300 changes rapidly, the electromagnetic power between the rotor 200 and the thin steel sheets of the magnetic pole 110 ∼ 113 becomes higher. Also under this circumstance, the magnetic noise becomes greater.

In the present embodiment, since the torque is increased as described above, the flux content is increased and the electromagnetic power between the thin steel sheets of the magnetic pole 110 ∼ 113 and the rotor 200 is increased, thereby increasing the magnetic noise.

The magnetic noise can be decreased by increasing the degree of contact between the thin steel sheets. Namely, the amplitude of vibration generated between the thin steel sheets can be limited.

Increasing contact pressure between the thin steel sheets is effective for increasing the degree of contact between the thin steel sheets.

In the present embodiment, for the purpose of increasing the contact pressure between the thin steel sheets of the magnetic poles 110 ∼ 113, the through-holes 105 ∼ 108 are provided in the nearest part of the yoke to the magnetic poles 110 ∼ 113, i.e. the yoke extension on the extended lines of the central axes of the magnetic poles, and the yoke 109 is fixed to the bracket with bolts through the through-holes 105 ∼ 108.

In the present embodiment, the contact pressure between the thin steel sheets on the magnetic poles 110 ∼ 113 are thus increased, thereby reducing the magnetic noise.

It is preferred that the through-holes 105 ∼ 108 are provided in positions with low magnetic flux density and without any effect on torque characteristics of the electrical machine. Of areas with low magnetic flux density, providing the through-holes 105 ∼ 108 in the closest position to the rotor is most effective for increasing the contact pressure between the thin steel sheets of the magnetic poles 110 ∼ 113.

For that reason, in the present embodiment, the through-holes 105 ∼ 108 are provided in the yoke extension so that the centers of the through-holes 105 ∼ 108 are provided on the diagonal lines 123 and 124 (on the extended lines of the central axes of the magnetic poles). This enables a radial width h1 of the yoke 109 between the magnetic pole and the nearest part of the through-hole to the magnetic pole to be smaller than the minimum radial width h (at circumferentially intermediate position of the yoke bridge) of the yoke 109 in the area with low magnetic flux density. The through-holes 105 ∼ 108 are thus provided in the closest position to the rotor.

According to the present embodiment, the thin steel sheets used for constituting the stator 100 are formed by punching steel strip sheets. At punching, the quadrilateral external form of the yoke 109 results in wasting materials less than a circular external form of the same does. According to the present embodiment, high productivity and easy handling for a punch die are thus achieved.

A mounting configuration of the electrical machine 300 is now explained with reference to FIG. 3.

FIG. 3 shows the mounting configuration of the electrical machine 300 to a differential gear box 400, which is a chassis of the differential gear 14.

It should be noted that a rear bracket 301 is shown in a cross section view passing through the center of a rotating shaft.

The stator 100 is axially-sandwiched by the rear bracket 301 and a front bracket 302, and is thus fixed. Bolts 303 and 304 are inserted into the through-holes 105 and 108 respectively, pass through to the side of the differential gear box 400, and are screwed to the differential gear box 400.

On the rear side of the rotor 200, a rotating shaft 307 is pivotally supported by a rear bearing 308.

In the front bracket 302, the commutator of the rotor 200, a current feed brush, a connecting terminal to be connected with an external feeder, and a front bearing that pivotally supports the rotating shaft of the rotor 200 are housed.

By screwing the bolts 303 and 304 to the differential gear box 400, the electrical machine 300 is fixed to the differential gear box 400 with the rotating shaft 307 (output shaft) meshing with the differential gear in the differential gear box 400.

It should be noted that bolts 305 and 306 are inserted respectively through the through-holes 106 and 107 which are not figured herein and are screwed to the differential gear box 400.

Having been placed under the floor of the vehicle, as described above, the electrical machine 300 thus assembled is vulnerable to external shock. The most typical example is that a stone is bounded on the road and hits the vehicle. If bolts that fixe the stator 100 are exposed, the bounded stone may hit the bolts and the bolts may be damaged and bent. This will result in disruption of the balance of tightening force at a plurality of fixing positions, thereby deforming the bolts and/or reducing the tightening force of the bolts.

In the present embodiment, however, the bolts 303 ∼ 306, which fix the electrical machine 300 to the differential gear box 400, pass through the through-holes 105 ∼ 108 of the yoke 109 without exposing any part of them. Therefore, even if a stone is bounded on the road, it does not hit the bolts 303

∼ 306 directly. The electrical machine 300 in the present embodiment can thus prevent the bolts from being damaged.

It should be noted that although in the present embodiment, as shown in FIG. 1, the angles 101 ∼ 104 are acute, they may be provided in an arc or chamfered. This is because the magnetic flux density is low at angles in the periphery due to the through-holes 105 ∼ 108 and the torque characteristics of the electrical machine are not affected according to the shape of the periphery.

In the present embodiment, as shown in FIG. 1, the through-holes 105 ∼ 108 and the magnetic poles 110 ∼ 113 are arranged with the diagonal lines 123 and 124 as the center lines. However, they may be displaced as long as the torque characteristics of the electrical machine and noise from the vibration of the yoke 109 and the magnetic poles 110 ∼ 113 are acceptable.

In the present embodiment, as shown in FIG. 1, the external form of the stator 100 (theyoke9) isasquare. However, it may be a rectangle. The through-holes 105 ∼ 108 may be displaced from the diagonal lines of the angles as long as the magnetic noise or the torque characteristics are acceptable.

As long as the torque characteristics are acceptable, the core of the stator 100 may consist of a compressed powder magneticmaterial. Also in this configuration, the electrical machine 300 is fixed to the differential gear box 400 without exposing the bolts 303 ∼ 306, thereby preventing the bolts from being damaged. - Second embodiment -

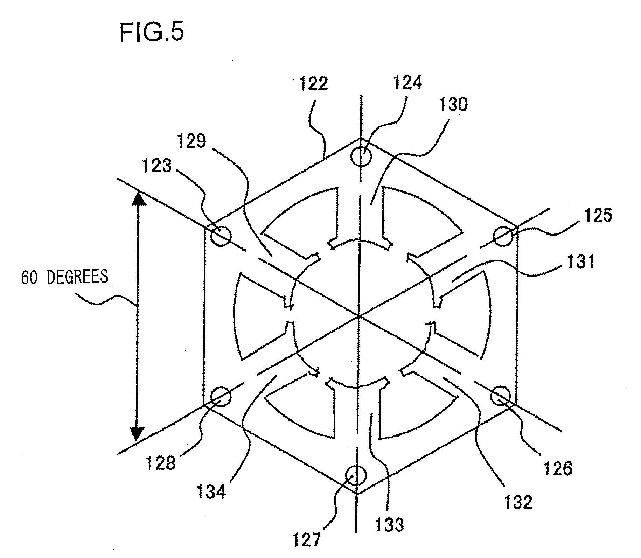

The second embodiment of the present invention is now described based upon FIG. 5.

FIG. 5 shows a cross-sectional view of a stator 122 of the electrical machine according to the present embodiment.

In the first embodiment, the external form of the stator (yoke) is a quadrilateral (square). However, operations and advantageous effects described in the first embodiment can be achieved with another polygon.

As an example, in the present embodiment, the external form of the stator 122 (yoke) is a regular hexagon.

Configurations are basically the same between the present embodiment and the first embodiment: the only difference is the number of magnetic poles and through-holes. Namely, six magnetic poles 129 ∼ 134 and six through-holes 123 ∼ 128 are provided corresponding to six angles of the stator 122 (yoke). In other words, the magnetic poles 129 ∼ 134 and the through-holes 123 ∼ 128 are placed on diagonal lines, as the center lines, which connect angles facing each other.

Also in the present embodiment, as in the first embodiment, the torque can be increased. Furthermore, in the present embodiment, bolts are passed through the through-holes 123 ∼ 128 so as to fix the electrical machine to the bracket of the differential gear box. This increases the contact pressure between the thin steel sheets of the magnetic poles and reduces the magnetic noise. In the present embodiment, since fixing bolts are not exposed, damage to the bolts by external impact can be prevented.

As described above, the electrical machine and the vehicle drive device equipped with the electrical machine according to the first and the second embodiments of the present invention improve magnetic properties.

Here, the magnetic properties include torque characteristics, magnetic noise characteristics, and the like, of the electrical machine.

The above-described embodiments are examples, and various modifications can be made without departing from the scope of the invention.

## Claims

1. An electrical machine, comprising:
a stator that comprises:
a yoke formed with laminated annular steel sheets; and
a plurality of magnetic poles which protrude towards an inner diameter side of the yoke and on which a field coil is wound, wherein:
in the stator, a radial width of a part of the yoke corresponding to a magnetic pole width is broader to an outer diameter side than a radial width of a part of the yoke provided throughout between the magnetic poles; and
the stator is provided with a thorough-hole for a tightening bolt in the part of the yoke with the broad radial width.

2. An electrical machine according to claim 1, wherein:
the stator is sandwiched by two brackets and fixed by a bolt passing through the through-hole.

3. An electrical machine according to claim 2, wherein:
one of the two brackets is a bracket of a part to which an output shaft of the electrical machine is connected and which is provided with a drive mechanism.

4. An electrical machine according to any of claims 1 to 3, wherein:
a shape of an outer periphery of the stator is a quadrilateral.

5. An electrical machine according to any of claims 1 to 3, wherein:
a shape of an outer periphery of the stator is a quadrilateral;
a number of the magnetic poles which protrude inward is a same as a number of angles of the quadrilateral; and
as many the through-holes as the angles of the quadrilateral are arranged in a back yoke width which corresponds to the magnetic pole width extended to the outer diameter side.

6. An electrical machine according to any of claims 1 to 3, wherein:
a shape of an outer periphery of the stator is a quadrilateral, and the magnetic poles and the through-holes are disposed in positions that include diagonal line segments of the quadrilateral.

7. An electrical machine according to any of claims 1 to 3, wherein:
a shape of an outer periphery of the stator is a quadrilateral, and the magnetic poles and the through-holes are disposed in symmetric positions on the diagonal line segments of the quadrilateral.

8. An electrical machine according to any of claims 1 to 3, wherein:
a shape of an outer periphery of the stator is a polygon.

9. An electrical machine according to any of claims 1 to 3, wherein:
a shape of an outer periphery of the stator is a polygon;
a number of the magnetic poles which protrude inward is a same as a number of angles of the polygon; and
as many the through-holes as the angles of the polygon are arranged in a back yoke width which corresponds to the magnetic pole width extended to the outer diameter side.

10. An electrical machine according to any of claims 1 to 3, wherein:
a shape of an outer periphery of the stator is a polygon, and the magnetic poles and the through-holes are disposed in positions that include line segments connecting a center and angles of the polygon.

11. An electrical machine, comprising:
a rotor that is rotatably held; and
a stator that is placed opposite to the rotor across a void, and comprises an annular core, a plurality of toothed cores that protrude from a surface of the rotor side of the annular core toward the rotor and that are circumferentially placed at intervals, and a coil that is wound on the plurality of toothed cores, wherein: the annular core and the plurality of toothed cores are configured so as to establish a relation, Lc < La < Lb, where:
La is a circumferential width at an end of an annular core side of the toothed core;
Lb is a minimum radial width of an extension part of the annular core that corresponds to an area of the circumferential width La and that extends on an opposite side of the rotor side of the toothed core; and
Lc is a minimum radial width of a bridge part of the annular core that connects between circumferentially adjacent extension parts of the annular core.

12. An electrical machine according to claim 11, wherein:
the extension part of the annular core is provided with a through-hole through which a fixing bolt for fixing the stator is inserted.

13. An electrical machine, comprising:
a rotor that is rotatably held; and
a stator that is placed opposite to the rotor across a void, and comprises an annular core, a plurality of toothed cores that protrude from a surface of the rotor side of the annular core toward the rotor and that are circumferentially placed at intervals, and a coil that is wound on the plurality of toothed cores, wherein:
the toothed core is formed so that its circumferential width is greater than the minimum radial width of the annular core; and
in the stator, a magnetic circuit is configured so that a magnetic flux, flowing from the rotor side of the toothed core to another side, flows through a part of the annular core whose radial width is greater than the minimum radial width of the annular core and the circumferential width of the toothed core, to a side of the minimum radial width of the annular core.

14. An electrical machine according to claim 13, wherein:
the annular core part with the greater radial width is provided with a through-hole through which a fixing bolt for fixing the stator is inserted.

15. A vehicle drive device, comprising:
an electrical machine that drives wheels other than wheels driven by an internal-combustion engine;
an electrical generator that is driven by the internal-combustion engine and that generates electric power for driving the electrical machine to supply the power to the electrical machine; and
a control device that controls drive of the electrical machine and the electrical generator, wherein:
the electrical machine is configured with the electrical machine according to claim 1, 11 or 13.
